# EUROPEAN PATENT SPECIFICATION

(11) **EP 4 651 367 B1**
(45) Date of publication and mention of the grant of the patent: **21.10.2026**
(21) Application number: 24793959.8
(22) Date of filing: 23.07.2024
(51) Int. Cl.: H02S 20/10

(54) **FLEXIBLE PHOTOVOLTAIC SUPPORT AND FLEXIBLE PHOTOVOLTAIC SYSTEM**
FLEXIBLER FOTOVOLTAISCHER TRÄGER UND FLEXIBLES FOTOVOLTAISCHES SYSTEM
SUPPORT PHOTOVOLTAÏQUE SOUPLE ET SYSTÈME PHOTOVOLTAÏQUE SOUPLE

(30) Priority: 29.03.2024 CN 202420628650 U
(43) Date of publication of application: 19.11.2025
(73) Proprietor: Arctech Solar Holding Co., Ltd., Kunshan Suzhou, Jiangsu 215331 (CN)
(72) Inventor: PENG, Yinghai, Suzhou, Jiangsu 215331 (CN); LIU, Haijun, Suzhou, Jiangsu 215331 (CN); YANG, Ying, Suzhou, Jiangsu 215331 (CN)
(74) Representative: Michalski Hüttermann & Partner mbB
(86) International application number: PCT/CN2024/106934
(87) International publication number: WO 2025/200200

(56) References cited:
- WO-A1-2023/019967
- CN-U- 207 603 512
- CN-U- 218 269 629
- CN-U- 218 940 985
- CN-U- 219 164 468
- CN-U- 219 834 036
- CN-U- 219 834 036

## Description

### CROSS-REFERENCE TO RELATED APPLICATION

The present application claims priority of a Chinese Patent Application No. 202420628650.X, filed on March 29, 2024 and titled "FLEXIBLE PHOTOVOLTAIC BRACKET AND FLEXIBLE PHOTOVOLTAIC SYSTEM WITH STABLE STRUCTURE".

### TECHNICAL FIELD

This application belongs to the field of photovoltaic technology, and in particular relates to a flexible photovoltaic bracket and a flexible photovoltaic system.

### BACKGROUND

At present, the rope supports of flexible photovoltaic brackets on the market are basically triangular supports. When an inclination angle of an assembly rope is large, a center of gravity of the module will be eccentric. After running for a period of time, a middle portion of a rope structure sags. When the rope support is applied to the flexible photovoltaic bracket, the eccentricity of the module's center of gravity causes the eccentric torque of the flexible photovoltaic bracket, resulting in poor stability of the flexible photovoltaic bracket.

CN 218 940 985 U discloses a flexible support cable structure including two load-bearing cables and two stabilizing cables. The ends of the load-bearing cables are fixed, forming a carrier for supporting photovoltaic modules. The two stabilizing cables are respectively located below corresponding two load-bearing cables, with their ends fixed. A plurality of support trusses are provided and spaced apart within a space enclosed by the two load-bearing cables and the two stabilizing cables, and each corner of the support trusses is connected to the two load-bearing cables and the two stabilizing cables. A flexible support is also disclosed, including a plurality of columns arranged in rows at intervals, a plurality of beams installed at the top of each column, and the aforementioned flexible support cable structure. The flexible support cable structure is installed between two adjacent beams.

CN 219 834 036 U discloses a large-span double-curved suspension cable flexible photovoltaic support, which includes: a plurality of longitudinal support structures, and upper and lower tie rods that connect the longitudinal support structures laterally into a whole. Each longitudinal support structure includes two load-bearing cables and one stabilizing cable. The stabilizing cable is located below the two load-bearing cables and is connected to each of the two load-bearing cables via tie cables. From a longitudinal section view, the stabilizing cable presents an upward arch shape, while the load-bearing cables present a downward arch shape, collectively forming a double-curved suspension cable. From a cross-sectional view, the two load-bearing cables and the stabilizing cable form a triangle, and the two load-bearing cables are connected at the tie cable junctions by struts, with these two tie cables and one strut forming a triangular tightening hoop.

Therefore, it is necessary to provide a new flexible photovoltaic bracket and flexible photovoltaic system to solve the above problems.

### SUMMARY

An object of the present application is to provide a flexible photovoltaic bracket and a flexible photovoltaic system. When an inclination angle of a plurality of photovoltaic modules installed on a rope structure is too large, the eccentric torque caused by the self-weight of the photovoltaic modules are reduced and the stability of the flexible photovoltaic bracket is improved.

In order to achieve the above object, the present application adopts the following first technical solution:
a flexible photovoltaic bracket, including:
a plurality of fixing structures;
a rope structure connected between two fixing structures which are disposed at intervals; the rope structure including a first assembly rope, a second assembly rope, a first stabilizing rope and a second stabilizing rope; the first assembly rope and the second assembly rope being located above the first stabilizing rope and the second stabilizing rope;
a support frame including an assembly rope support rod, a first side support rod, a second side support rod and a stabilizing rope support rod; two ends of the assembly rope support rod being connected to the first assembly rope and the second assembly rope; the first side support rod being connected to the first assembly rope and the first stabilizing rope; the second side support rod being connected to the second assembly rope and the second stabilizing rope; two ends of the stabilizing rope support rod being connected to the first stabilizing rope and the second stabilizing rope; a length of the assembly rope support rod being shorter than a length of the stabilizing rope support rod; the first side support rod and/or the second side support rod extend obliquely to an outside along a top-to-bottom direction.

Furthermore, the support frame is symmetrical with respect to a center vertical line of the assembly rope support rod.

Furthermore, an angle between the first side support rod and the stabilizing rope support rod is within 30 degrees to 90 degrees; and/or
an angle between the second side support rod and the stabilizing rope support rod is within 30 degrees to 90 degrees.

Furthermore, the support frame further includes a first support rod and a second support rod; two ends of the first support rod are connected to the assembly rope support rod and the stabilizing rope support rod, respectively; two ends of the second support rod are connected to the assembly rope support rod and the stabilizing rope support rod, respectively; the first support rod, the second support rod and the stabilizing rope support rod form a triangle, or, the first support rod, the second support rod and the assembly rope support rod form a triangle.

Furthermore, the assembly rope support rod, the first side support rod, the second side support rod and the stabilizing rope support rod are located on a same plane.

Furthermore, the assembly rope support rod and the stabilizing rope support rod are U-shaped steel; an opening of the assembly rope support rod and an opening of the stabilizing rope support rod are opposite to each other; two ends of the first side support rod and two ends of the second side support rod are respectively inserted into an opening of the U-shaped steel and connected through fasteners.

Furthermore, the support frame further includes a plurality of connecting components, and the two ends of the assembly rope support rod are respectively provided with the connecting components;
wherein the first assembly rope and the second assembly rope pass through the connecting components and are connected to the assembly rope support rod; and/or, the two ends of the stabilizing rope support rod are respectively provided with the connecting components, the first stabilizing rope and the second stabilizing rope pass through the connecting components and are connected to the stabilizing rope support rod.

Furthermore, a plurality of the support frames are provided and disposed at intervals along a length direction of the rope structure; the plurality of support frames include a first support frame located in a middle of the rope structure and a plurality of second support frames provided on two sides of the first support frame along the length direction; an area of the first support frame is larger than an area of the second support frame.

In order to achieve the above object, the present application adopts the following second technical solution:
a flexible photovoltaic system, including: the above flexible photovoltaic bracket; the flexible photovoltaic system further including a plurality of photovoltaic modules installed on the flexible photovoltaic bracket; the photovoltaic modules being fixedly connected to the first assembly rope and the second assembly rope.

Furthermore, the flexible photovoltaic bracket further includes a plurality of pressing blocks which are arranged on an edge of the photovoltaic module; the first assembly rope and the second assembly rope pass through the pressing blocks; the photovoltaic module is connected to the first assembly rope and the second assembly rope through the pressing blocks.

Compared with the prior art, the beneficial effects of the present application are as follows.

The assembly rope support rod of the flexible photovoltaic bracket of the present application is connected to the first assembly rope and the second assembly rope. The first side support rod is connected to the first assembly rope and the first stabilizing rope. The second side support rod is connected to the second assembly rope and the second stabilizing rope. The stabilizing rope support rod is connected to the first stabilizing rope and the second stabilizing rope. The length of the assembly rope support rod is shorter than the length of the stabilizing rope support rod. The first side support rod and/or the second side support rod extend obliquely to the outside along the top-to-bottom direction. When the assembly ropes installed with the photovoltaic modules assume an inclination angle driven by a rotary drive mechanism, the prestressed force of the two stabilizing ropes will support the two assembly ropes and the photovoltaic modules through the first side support rod and/or the second side support rod, which will not easily cause distortion of the module. A lower edge of the photovoltaic modules will not cause arc sagging, thereby improving the wind resistance stability of the structure of the flexible photovoltaic bracket.

### BRIEF DESCRIPTION OF DRAWINGS

FIG. 1 is a perspective schematic view of a flexible photovoltaic system of the present application;
FIG. 2 is a partially enlarged schematic view of part A in FIG. 1;
FIG. 3 is a partially enlarged schematic view of a support frame and a rope structure of the present application;
FIG. 4 is a front view of the support frame of the present application;
FIG. 5 is a perspective view of FIG. 4 from another angle;
FIG. 6 is a partially enlarged schematic view of a second assembly rope, an assembly rope support rod and a connecting component in an assembled state of the present application;
FIG. 7 is a partially enlarged schematic view of a second stabilizing rope, a stabilizing rope support rod and a connecting component in an assembled state of the present application;
FIG. 8 is a perspective exploded schematic view of the connecting component and a pair of nuts of the present application; and
FIG. 9 is a perspective view of the photovoltaic module and a pressing block in an assembled state of the present application.

### DETAILED DESCRIPTION

Exemplary embodiments of the present application will be described in detail below with reference to the accompanying drawings. If there are several specific embodiments, features of these embodiments may be combined with each other provided there is no conflict. When the description refers to the drawings, the same numbers in different drawings refer to the same or similar elements, unless otherwise stated. The following description of exemplary embodiments does not represent all embodiments consistent with the present application. Rather, they are merely examples of devices, products and/or methods consistent with aspects of the present application as recited in the claims of the present application.

The terminologies used in the present application are only for the purpose of describing specific embodiments, and are not intended to limit the protection scope of the present application. The singular forms "a", "said", and "the" used in the specification and claims of the present application are also intended to include plural forms unless the context clearly indicates other meanings.

It should be understood that the terms "first", "second" and similar words used in the specification and claims of the present application do not represent any order, quantity or importance, but are only used to distinguish different components. Similarly, "an" or "a" and other similar words do not mean a quantity limit, but mean that there is at least one. Unless otherwise noted, "front", "rear", "top", "bottom" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present disclosure includes two or more.

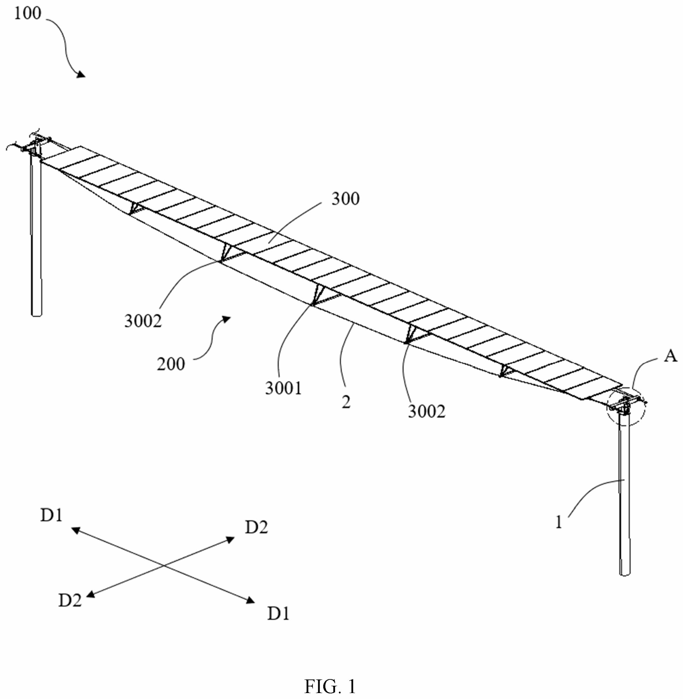

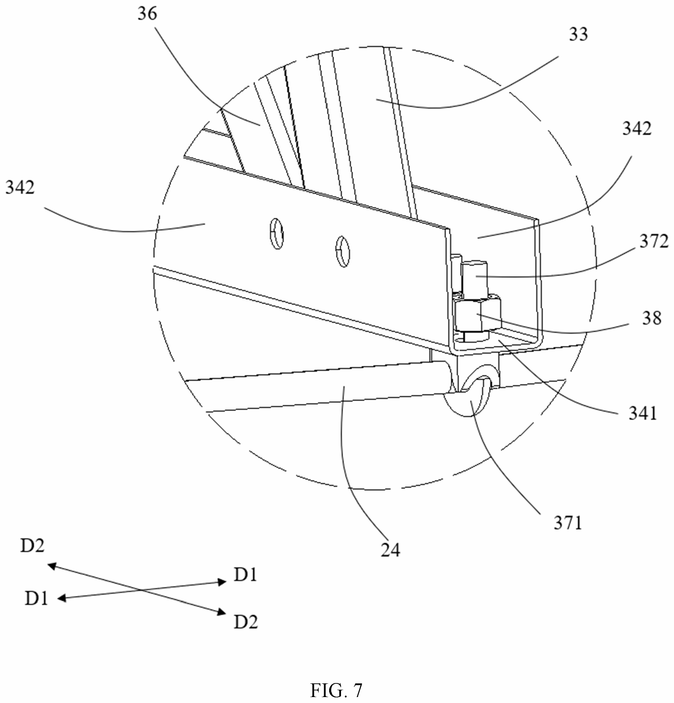

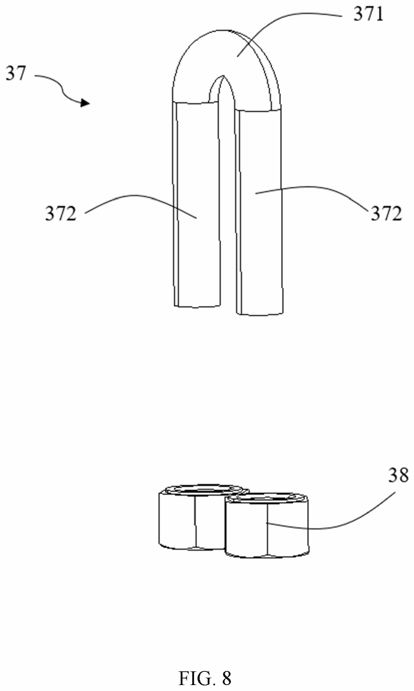

Referring to FIG. 1 to FIG. 9, the present application discloses a flexible photovoltaic system 100. The flexible photovoltaic system 100 includes a flexible photovoltaic bracket 200 and a plurality of photovoltaic modules 300 installed on the flexible photovoltaic bracket 200. The flexible photovoltaic bracket 200 includes a plurality of fixing structures 1, a rope structure 2 and a plurality of support frames 3. The rope structure 2 is connected between two fixing structures 1 which are disposed at intervals. The rope structure 2 includes a first assembly rope 21, a second assembly rope 22, a first stabilizing rope 23 and a second stabilizing rope 24. The first assembly rope 21 and the second assembly rope 22 are located above the first stabilizing rope 23 and the second stabilizing rope 24. The support frame 3 includes an assembly rope support rod 31, a first side support rod 32, a second side support rod 33 and a stabilizing rope support rod 34. The assembly rope support rod 31, the first side support rod 32, the second side support rod 33 and the stabilizing rope support rod 34 are arranged in a same plane. Of course, the assembly rope support rod 31, the first side support rod 32, the second side support rod 33 and the stabilizing rope support rod 34 may not be coplanar. Two ends of the assembly rope support rod 31 are connected to the first assembly rope 21 and the second assembly rope 22. The first side support rod 32 is connected to the first assembly rope 21 and the first stabilizing rope 23. The second side support rod 33 is connected to the second assembly rope 22 and the second stabilizing rope 24. Two ends of the stabilizing rope support rod 34 are connected to the first stabilizing rope 23 and the second stabilizing rope 24. A length of the assembly rope support rod 31 is shorter than a length of the stabilizing rope support rod 34. The first side support rod 32 and/or the second side support rod 33 extend obliquely to an outside along a top-to-bottom direction. The outside mentioned herein refers to an outside along an extension direction of the assembly rope support rod 31, that is, a width direction D2-D2 of the rope structure 2. The width direction D2-D2 of the rope structure 2 and a length direction D1-D1 of the rope structure 2 are perpendicular to each other. The support frame 3 is symmetrical with respect to a center vertical line of the assembly rope support rod 31. The first side support rod 32 and the second side support rod 33 are symmetrical relative to the center vertical line of the assembly rope support rod 31. Such an arrangement allows the support frame 3 to assume a trapezoidal structure. By fixing the flexible photovoltaic bracket 200 to the first assembly rope 21 and the second assembly rope 22, the assembly rope support rod 31 of the support frame 3 is in contact with a back of the photovoltaic modules 300, thereby reducing the eccentric torque caused by the self-weight of the photovoltaic modules 300, and improving the distortion and deformation of the plane of the photovoltaic modules 300.

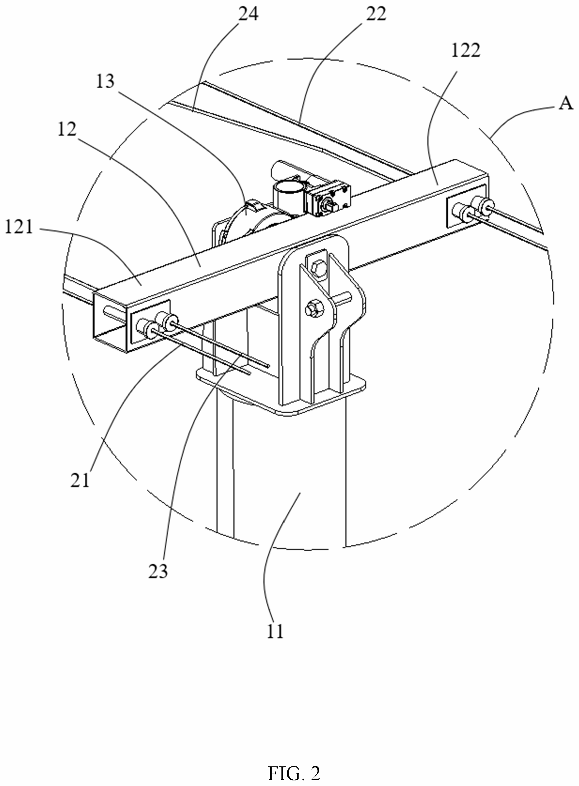

Referring to FIG. 1 and FIG. 2, in the present embodiment, the fixing structure 1 includes a plurality of upright columns 11, a plurality of cross beams 12 and a plurality of rotary driving mechanisms 13. The cross beam 12 is rotatably installed on a top of the upright column 11. The rotary driving mechanism 13 drives the cross beam 12 to rotate on the top of the upright column 11. The cross beam 12 includes a first end 121 and a second end 122 which are oppositely arranged along the width direction D2-D2. The first assembly rope 21 and the first stabilizing rope 23 pass through the first end 121. The second assembly rope 22 and the second stabilizing rope 24 pass through the second end 122. When the cross beam 12 rotates, the photovoltaic modules 300 are driven to rotate synchronously through the first assembly rope 21, the first stabilizing rope 23, the second assembly rope 22 and the second stabilizing rope 24.

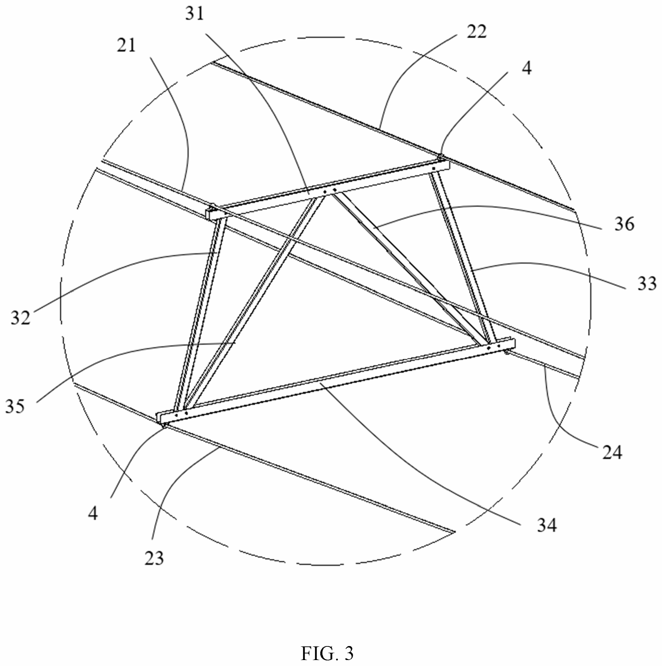

Referring to FIG. 3 to FIG. 5, an included angle between the first side support rod 32 and the stabilizing rope support rod 34 is within 30 degrees to 90 degrees, and/or an included angle between the second side support rod 33 and the stabilizing rope support rod 34 is within 30 degrees to 90 degrees. When the included angle is less than 30 degrees, the slenderness ratio is large, the material consumption is large, and the cost is high. When the included angle is greater than 90 degrees, when the photovoltaic modules 300 rotates and forms a large inclination angle with the ground, the support frame 3 cannot overcome the overturning moment caused by gravity eccentricity. Preferably, the included angle between the first side support rod 32 and the stabilizing rope support rod 34 is 45 degrees, and/or the included angle between the second side support rod 33 and the stabilizing rope support rod 34 is 45 degrees. From this perspective, it can have the advantages of both cost and anti-torsion performance. The included angle between the first side support rod 32 and the stabilizing rope support rod 34 is a first included angle a. The included angle between the second side support rod 33 and the stabilizing rope support rod 34 is a second included angle b. In a first embodiment, the first included angle a and the second included angle b are both within 30 degrees to 90 degrees, and the first included angle a and the second included angle b are the same. Then, the first side support rod 32 and the second side support rod 33 extend obliquely to the outside along the top-to-bottom direction, and the support frame 3 has a trapezoidal structure. In a second embodiment, the first included angle a is within 30 degrees to 90 degrees. The first included angle a and the second included angle b are different. Then, the first side support rod 32 extends obliquely to the outside along the top-to-bottom direction, and the support frame 3 has a non-normal trapezoidal structure. In a third embodiment, the second included angle b is within 30 degrees to 90 degrees. The first included angle a and the second included angle b are different. Then, the second side support rod 33 extends to the outside along the top-to-bottom direction, and the support frame 3 has a non-normal trapezoidal structure. Such an arrangement can improve the overall structural strength of the support frame 3 so that the support frame 3 can support the photovoltaic modules 300. The present application reduces the eccentric torque of the photovoltaic modules 300 caused by its own weight, thereby preventing the plane of the photovoltaic modules 300 from being twisted.

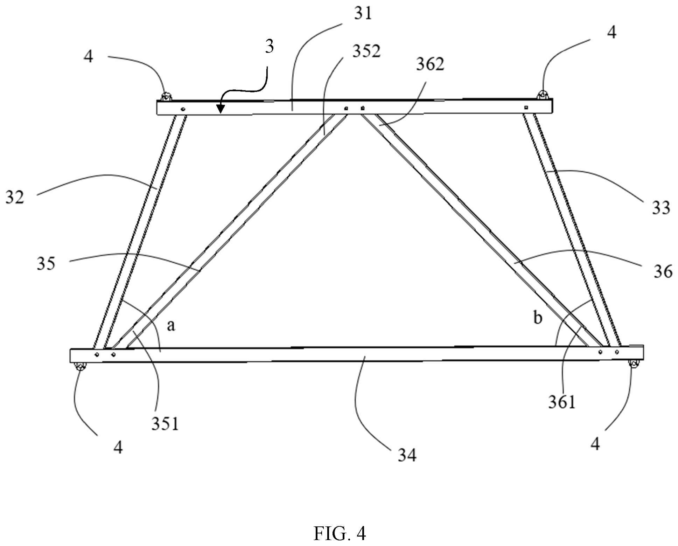

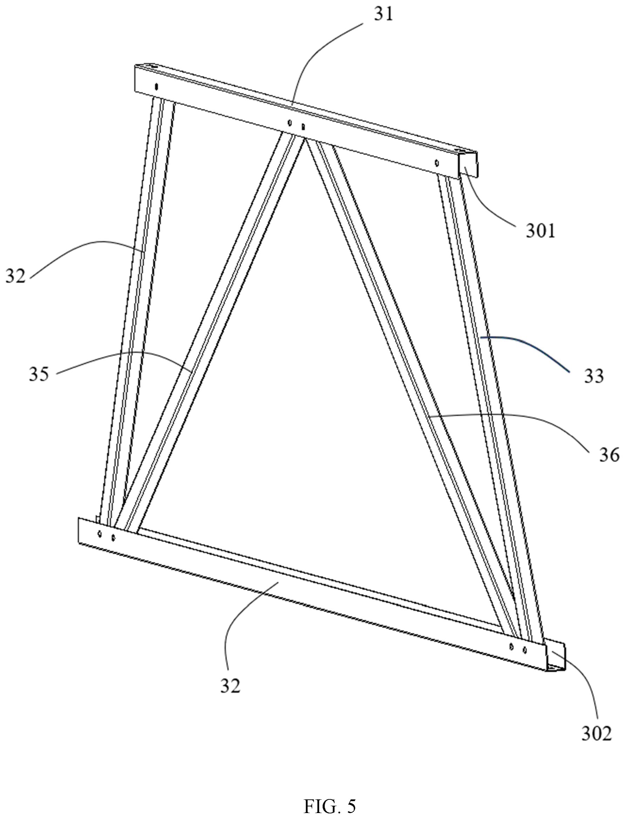

Referring to FIG. 4 and FIG. 5, the support frame 3 further includes a first support rod 35 and a second support rod 36. Two ends of the first support rod 35 are connected to the assembly rope support rod 31 and the stabilizing rope support rod 34, respectively. Two ends of the second support rod 36 are connected to the assembly rope support rod 31 and the stabilizing rope support rod 34, respectively. The first support rod 35, the second support rod 36 and the stabilizing rope support rod 34 (or the assembly rope support rod 31) form a triangle. The first support rod 35 includes a first end 351 and a second end 352 which is disposed oppositely to the first end 351. The second support rod 36 includes a third end 361 and a fourth end 362 which is disposed oppositely to the third end 361. In a first embodiment, the first end 351 is disposed adjacent to a connection between the first side support rod 32 and the stabilizing rope support rod 34. The second end 352 is disposed adjacent to a midpoint of the assembly rope support rod 31. The third end portion 361 is disposed adjacent to a connection between the second side support rod 33 and the stabilizing rope support rod 34. The fourth end 362 is disposed adjacent to the midpoint of the assembly rope support rod 31. In this way, the first support rod 35, the second support rod 36 and the stabilizing rope support rod 34 form a triangular structure, by which improves the overall structural strength of the support frame 3. In a second embodiment, the first end 351 is disposed adjacent to a connection between the first side support rod 32 and the assembly rope support rod 31. The second end 352 is disposed adjacent a midpoint of the stabilizing rope support rod 34. The third end portion 361 is disposed adjacent to a connection between the second side support rod 33 and the assembly rope support rod 31. The fourth end 362 is disposed adjacent to a midpoint of the stabilizing rope support rod 34. In this way, the first support rod 35, the second support rod 36 and the assembly rope support rod 31 form a triangular structure, by which improves the overall structural strength of the support frame 3.

Referring to FIG. 5, the assembly rope support rod 31 and the stabilizing rope support rod 34 are U-shaped steel. An opening of the assembly rope support rod 31 and an opening of the stabilizing rope support rod 34 are opposite to each other. Two ends of the first side support rod 32 and two ends of the second side support rod 33 are respectively inserted through an opening of the U-shaped steel and connected through fasteners. Preferably, the assembly rope support rod 31 and the stabilizing rope support rod 34 are arranged parallel to each other. The assembly rope support rod 31 extends along the width direction D2-D2 of the rope structure 2. The width direction D2-D2 and the length direction D1-D1 are perpendicular to each other. The assembly rope support rod 31 includes a first top wall 311 and two first side walls 312. The first top wall 311 extends along the width direction D2-D2. The two first side walls 312 extend vertically downward from two ends of the first top wall 311. The two first side walls 312 and the first top wall 311 form a first opening 301. The stabilizing rope support rod 34 includes a first bottom wall 341 and two second side walls 342. The first bottom wall 341 extends along the width direction D2-D2 of the rope structure 2. The two second side walls 342 extend vertically upward from two ends of the first bottom wall 341. The two second side walls 342 and the first bottom wall 341 form a second opening 302. The first opening 301 is opposite to the second opening 302, so that the two ends of the first side support rod 32 and the two ends of the second side support rod 33 are respectively inserted into the first opening 301 and the second opening 302, and connected through fasteners, thereby improving the overall structural strength of the support frame 3.

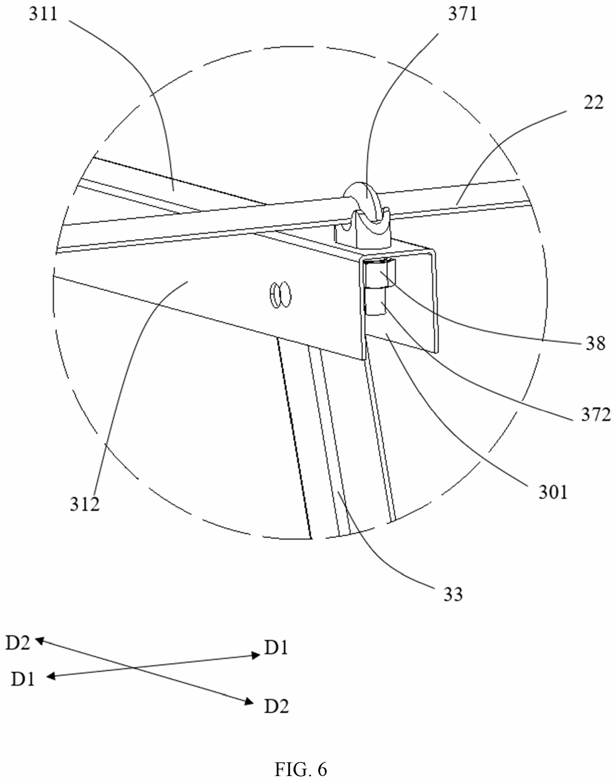

Referring to FIG. 6 to FIG. 8, the support frame 3 further includes a plurality of connecting components 37. The two ends of the assembly rope support rod 31 are respectively provided with the connecting components 37. The first assembly rope 21 and the second assembly rope 22 are connected to the assembly rope support rod 31 through the connecting components 37. The connecting component 37 is U-shaped. The connecting component 37 includes a U-shaped portion 371 and two free ends 372 provided at two ends of the U-shaped portion 371. The two free ends 372 pass through the first top wall 311 and are connected to the nuts 38. The first assembly rope 21 and the second assembly rope 22 pass through the U-shaped portion 371 respectively, so that the first assembly rope 21 and the second assembly rope 22 can be connected to the assembly rope support rod 31. The two ends of the stabilizing rope support rod 34 are respectively provided with the connecting components 37. The two free ends 372 of the connecting component 37 respectively pass through the first bottom wall 341 and are connected to the nuts 38. The first stabilizing rope 23 and the second stabilizing rope 24 pass through the U-shaped portion 371 respectively, so that the first stabilizing rope 23 and the second stabilizing rope 24 can be connected to the stabilizing rope support rod 34. As a result, the first assembly rope 21, the second assembly rope 22, the first stabilizing rope 23 and the second stabilizing rope 24 can rotate synchronously, which can drive the support frame 3 to rotate, thereby ensuring the plane flatness of the photovoltaic modules 300 during the rotation process.

Referring to FIG. 1, a plurality of support frames 3 are provided and arranged at intervals along the length direction D1-D1 of the rope structure 2. The plurality of support frames 3 include a first support frame 3001 located in a middle of the rope structure 2 and a plurality of second support frames 3002 located on two sides of the first support frame 3001 in the length direction D1-D1. An area of the first support frame 3001 is larger than an area of the second support frame 3002, so that the first stabilizing rope 23 and the second stabilizing rope 24 have an upward concave shape, thereby improving the wind resistance performance of the flexible photovoltaic system 100.

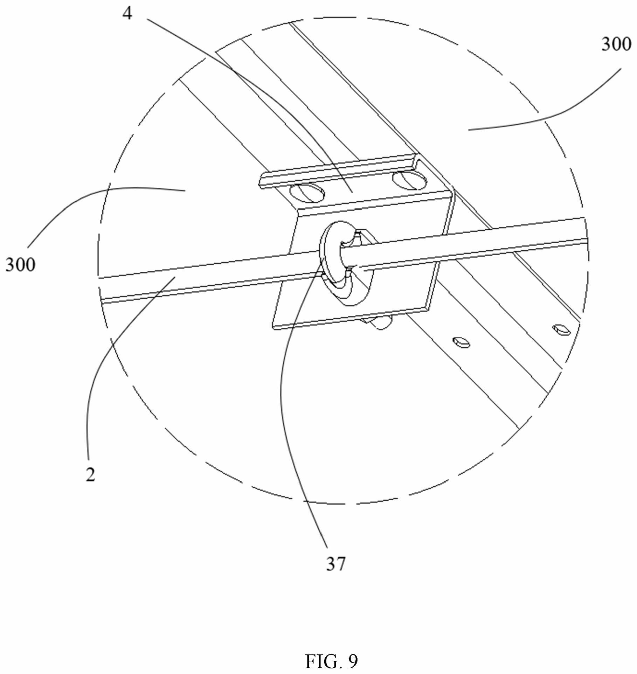

Referring to FIG. 9, the photovoltaic modules 300 are fixedly connected to the first module rope 21 and the second module rope 22. The flexible photovoltaic bracket 200 further includes a plurality of pressing blocks 4. The pressing blocks 4 are arranged on an edge of the photovoltaic modules 300. The first assembly rope 21 and the second assembly rope 22 pass through the pressing blocks 4. The photovoltaic modules 300 are connected to the first module rope 21 and the second module rope 22 through the pressing blocks 4. Specifically, the plurality of pressing blocks 4 are symmetrically arranged on two sides of the photovoltaic modules 300 along an extension direction of the photovoltaic modules 300. The extension directions of the photovoltaic modules 300 are consistent with the length direction D1-D1 of the rope structure 2. One end of the pressing block 4 is connected to the photovoltaic module 300 through a fastener, and the other end of the pressing block 4 is provided with the connecting component 37. The first assembly rope 21 or the second assembly rope 22 is connected to the pressing block 4 through the connecting component 37, so that the photovoltaic modules 300 can be fixedly connected to the first assembly rope 21 and the second assembly rope 22. When the first assembly rope 21 and the second assembly rope 22 rotate, the photovoltaic modules 300 can be driven to rotate synchronously. The fixing parts of the photovoltaic modules 300 are well-known technologies, and there are no restrictions on the fixing parts of the photovoltaic modules 300, as long as the fixing connection between the photovoltaic modules 300 and the rope structure 2 can be achieved, no further details will be given here.

In summary, the present application discloses the flexible photovoltaic bracket 200. The flexible photovoltaic bracket 200 includes the plurality of fixing structures 1, the rope structure 2 and the plurality of support frames 3. The rope structure 2 is connected to two fixing structures 1 which are disposed at intervals. The rope structure 2 includes the first assembly rope 21, the second assembly rope 22, the first stabilizing rope 23 and the second stabilizing rope 24. The first assembly rope 21 and the second assembly rope 22 are located above the first stabilizing rope 23 and the second stabilizing rope 24. The support frame 3 includes the assembly rope support rod 31, the first side support rod 32, the second side support rod 33 and the stabilizing rope support rod 34. The assembly rope support rod 31 is connected to the first assembly rope 21 and the second assembly rope 22. The first side support rod 32 is connected to the first assembly rope 21 and the first stabilizing rope 23. The second side support rod 33 is connected to the second assembly rope 22 and the second stabilizing rope 24. The stabilizing rope support rod 34 is connected to the first stabilizing rope 23 and the second stabilizing rope 24. The length of the assembly rope support rod 31 is shorter than the length of the stabilizing rope support rod 34. The first side support rod 32 and/or the second side support rod 33 extend obliquely to the outside along the top-to-bottom direction. When the inclination angle of the photovoltaic modules 300 installed on the rope structure 2 is too large, the first side support rod 32 and/or the second side support rod 33 can support the rope structure 2 and the photovoltaic modules 300. The lower edge of the photovoltaic modules 300 will not sag in an arc and will not easily cause the module to twist, thereby improving the stability of the structure of the flexible photovoltaic bracket 200.

The above embodiments are only used to illustrate the present application and do not limit the technical solutions described in the present application. The understanding of this description should be based on those skilled in the art, such as the description of directions such as "front", "back", "left", "right", "top" and "bottom", although the present application has been described in detail with reference to the above-mentioned embodiments, those skilled in the art should understand that those skilled in the art can still make modifications or equivalent substitutions to the present application.

## Claims

1. A flexible photovoltaic bracket (200), comprising:
a plurality of fixing structures (1);
a rope structure (2) connected between two fixing structures (1) which are disposed at intervals; the rope structure (2) comprising a first assembly rope (21), a second assembly rope (22), a first stabilizing rope (23) and a second stabilizing rope (24); the first assembly rope (21) and the second assembly rope (22) being located above the first stabilizing rope (23) and the second stabilizing rope (24);
a support frame (3) comprising an assembly rope support rod (31), a first side support rod (32), a second side support rod (33) and a stabilizing rope support rod (34); two ends of the assembly rope support rod (31) being connected to the first assembly rope (21) and the second assembly rope (22); the first side support rod (32) being connected to the assembly rope support rod (31) and the stabilizing rope support rod (34); the second side support rod (33) being connected to the assembly rope support rod (31) and the stabilizing rope support rod (34); two ends of the stabilizing rope support rod (34) being connected to the first stabilizing rope (23) and the second stabilizing rope (24); **characterized in that** a length of the assembly rope support rod (31) is being shorter than a length of the stabilizing rope support rod (34); and **in that** the first side support rod (32) and/or the second side support rod (33) extend obliquely to an outside along a top-to-bottom direction.

2. The flexible photovoltaic bracket (200) according to claim 1, wherein the support frame (3) is symmetrical with respect to a center vertical line of the assembly rope support rod (31).

3. The flexible photovoltaic bracket (200) according to claim 1, wherein an angle between the first side support rod (32) and the stabilizing rope support rod (34) is within 30 degrees to 90 degrees; and/or
an angle between the second side support rod (33) and the stabilizing rope support rod (34) is within 30 degrees to 90 degrees.

4. The flexible photovoltaic bracket (200) according to claim 1, wherein the support frame (3) further comprises a first support rod (35) and a second support rod (36); two ends of the first support rod (35) are connected to the assembly rope support rod (31) and the stabilizing rope support rod (34), respectively; two ends of the second support rod (36) are connected to the assembly rope support rod (31) and the stabilizing rope support rod (34), respectively; the first support rod (35), the second support rod (36) and the stabilizing rope support rod (34) form a triangle, or, the first support rod (35), the second support rod (36) and the assembly rope support rod (31) form a triangle.

5. The flexible photovoltaic bracket (200) according to claim 1, wherein the assembly rope support rod (31), the first side support rod (32), the second side support rod (33) and the stabilizing rope support rod (34) are located on a same plane.

6. The flexible photovoltaic bracket (200) according to claim 5, wherein the assembly rope support rod (31) and the stabilizing rope support rod (34) are U-shaped steel; an opening of the assembly rope support rod (31) and an opening of the stabilizing rope support rod (34) are opposite to each other; two ends of the first side support rod (32) and two ends of the second side support rod (33) are respectively inserted into an opening of the U-shaped steel and connected through fasteners.

7. The flexible photovoltaic bracket (200) according to claim 1, wherein the support frame (3) further comprises a plurality of connecting components (37), and the two ends of the assembly rope support rod (31) are respectively provided with the connecting components (37);
wherein the first assembly rope (21) and the second assembly rope (22) pass through the connecting components (37) and are connected to the assembly rope support rod (31); and/or, the two ends of the stabilizing rope support rod (34) are respectively provided with the connecting components (37), the first stabilizing rope (23) and the second stabilizing rope (24) pass through the connecting components (37) and are connected to the stabilizing rope support rod (34).

8. The flexible photovoltaic bracket (200) according to claim 1, wherein a plurality of the support frames (3) are provided and disposed at intervals along a length direction (D1-D1) of the rope structure (2); the plurality of support frames (3) comprise a first support frame (3001) located in a middle of the rope structure (2) and a plurality of second support frames (3002) provided on two sides of the first support frame (3001) along the length direction (D1-D1); an area of the first support frame (3001) is larger than an area of the second support frame (3002).

9. A flexible photovoltaic system (100), comprising: the flexible photovoltaic bracket (200) according to any one of claims 1 to 8; the flexible photovoltaic system (100) further comprising a plurality of photovoltaic modules (300) installed on the flexible photovoltaic bracket (200); the photovoltaic modules (300) being fixedly connected to the first assembly rope (21) and the second assembly rope (22).

10. The flexible photovoltaic system (100) according to claim 9, wherein the flexible photovoltaic bracket (200) further comprises a plurality of pressing blocks (4) which are arranged on an edge of the photovoltaic modules (300); the first assembly rope (21) and the second assembly rope (22) pass through the pressing blocks (4); the photovoltaic modules (300) are connected to the first assembly rope (21) and the second assembly rope (22) through the pressing blocks (4).

## Patentansprüche

1. Flexible Photovoltaikhalterung (200), umfassend:
eine Vielzahl von Befestigungsstrukturen (1);
eine Seilstruktur (2), die zwischen zwei Befestigungsstrukturen (1) verbunden ist, die in Abständen angeordnet sind; wobei die Seilstruktur (2) ein erstes Montageseil (21), ein zweites Montageseil (22), ein erstes Stabilisierungsseil (23) und ein zweites Stabilisierungsseil (24) umfasst; wobei sich das erste Montageseil (21) und das zweite Montageseil (22) über dem ersten Stabilisierungsseil (23) und dem zweiten Stabilisierungsseil (24) befinden;
einen Tragrahmen (3), der eine Montageseiltragstange (31), eine erste Seitentragstange (32), eine zweite Seitentragstange (33) und eine Stabilisierungsseiltragstange (34) umfasst; wobei zwei Enden der Montageseiltragstange (31) mit dem ersten Montageseil (21) und dem zweiten Montageseil (22) verbunden sind; wobei die erste Seitentragstange (32) mit der Montageseiltragstange (31) und der Stabilisierungsseiltragstange (34) verbunden ist; wobei die zweite Seitentragstange (33) mit der Montageseiltragstange (31) und der Stabilisierungsseiltragstange (34) verbunden ist; wobei zwei Enden der Stabilisierungsseiltragstange (34) mit dem ersten Stabilisierungsseil (23) und dem zweiten Stabilisierungsseil (24) verbunden sind;
**dadurch gekennzeichnet, dass**
eine Länge der Montageseiltragstange (31) kürzer als eine Länge der Stabilisierungsseiltragstange (34) ist;
und dadurch, dass sich die erste Seitentragstange (32) und/oder die zweite Seitentragstange (33) schräg nach außen entlang einer Richtung von oben nach unten erstrecken.

2. Flexible Photovoltaikhalterung (200) nach Anspruch 1, wobei der Tragrahmen (3) in Bezug auf eine vertikale Mittellinie der Montageseiltragstange (31) symmetrisch ist.

3. Flexible Photovoltaikhalterung (200) nach Anspruch 1, wobei ein Winkel zwischen der ersten Seitentragstange (32) und der Stabilisierungsseiltragstange (34) innerhalb von 30 Grad bis 90 Grad liegt; und/oder
ein Winkel zwischen der zweiten Seitentragstange (33) und der Stabilisierungsseiltragstange (34) innerhalb von 30 Grad bis 90 Grad liegt.

4. Flexible Photovoltaikhalterung (200) nach Anspruch 1, wobei der Tragrahmen (3) ferner eine erste Tragstange (35) und eine zweite Tragstange (36) umfasst; zwei Enden der ersten Tragstange (35) mit der Montageseiltragstange (31) bzw. der Stabilisierungsseiltragstange (34) verbunden sind; zwei Enden der zweiten Tragstange (36) mit der Montageseiltragstange (31) bzw. der Stabilisierungsseiltragstange (34) verbunden sind; die erste Tragstange (35), die zweite Tragstange (36) und die Stabilisierungsseiltragstange (34) ein Dreieck bilden oder die erste Tragstange (35), die zweite Tragstange (36) und die Montageseiltragstange (31) ein Dreieck bilden.

5. Flexible Photovoltaikhalterung (200) nach Anspruch 1, wobei sich die Montageseiltragstange (31), die erste Seitentragstange (32), die zweite Seitentragstange (33) und die Stabilisierungsseiltragstange (34) auf einer gleichen Ebene befinden.

6. Flexible Photovoltaikhalterung (200) nach Anspruch 5, wobei die Montageseiltragstange (31) und die Stabilisierungsseiltragstange (34) U-förmiger Stahl sind; eine Öffnung der Montageseiltragstange (31) und eine Öffnung der Stabilisierungsseiltragstange (34) einander gegenüberliegend sind; zwei Enden der ersten Seitentragstange (32) und zwei Enden der zweiten Seitentragstange (33) jeweils in eine Öffnung des U-förmigen Stahls eingesetzt und durch Befestigungselemente verbunden sind.

7. Flexible Photovoltaikhalterung (200) nach Anspruch 1, wobei der Tragrahmen (3) ferner eine Vielzahl von Verbindungskomponenten (37) umfasst und die zwei Enden der Montageseiltragstange (31) jeweils mit den Verbindungskomponenten (37) versehen sind;
wobei das erste Montageseil (21) und das zweite Montageseil (22) durch die Verbindungskomponenten (37) verlaufen und mit der Montageseiltragstange (31) verbunden sind; und/oder die zwei Enden der Stabilisierungsseiltragstange (34) jeweils mit den Verbindungskomponenten (37) versehen sind, das erste Stabilisierungsseil (23) und das zweite Stabilisierungsseil (24) durch die Verbindungskomponenten (37) verlaufen und mit der Stabilisierungsseiltragstange (34) verbunden sind.

8. Flexible Photovoltaikhalterung (200) nach Anspruch 1, wobei eine Vielzahl der Tragrahmen (3) in Abständen entlang einer Längenrichtung (D1-D1) der Seilstruktur (2) bereitgestellt und angeordnet ist; die Vielzahl von Tragrahmen (3) einen ersten Tragrahmen (3001), der sich in einer Mitte der Seilstruktur (2) befindet, und eine Vielzahl von zweiten Tragrahmen (3002), die an zwei Seiten des ersten Tragrahmens (3001) entlang der Längenrichtung (D1-D1) bereitgestellt ist, umfasst; ein Bereich des ersten Tragrahmens (3001) größer als ein Bereich des zweiten Tragrahmens (3002) ist.

9. Flexibles Photovoltaiksystem (100), umfassend: die flexible Photovoltaikhalterung (200) nach einem der Ansprüche 1 bis 8; wobei das flexible Photovoltaiksystem (100) ferner eine Vielzahl von Photovoltaikmodulen (300) umfasst, die auf der flexiblen Photovoltaikhalterung (200) installiert ist; wobei die Photovoltaikmodule (300) fest mit dem ersten Montageseil (21) und dem zweiten Montageseil (22) verbunden sind.

10. Flexibles Photovoltaiksystem (100) nach Anspruch 9, wobei die flexible Photovoltaikhalterung (200) ferner eine Vielzahl von Pressblöcken (4) umfasst, die an einer Kante der Photovoltaikmodule (300) angeordnet ist; das erste Montageseil (21) und das zweite Montageseil (22) durch die Pressblöcke (4) verlaufen; die Photovoltaikmodule (300) mit dem ersten Montageseil (21) und dem zweiten Montageseil (22) durch die Pressblöcke (4) verbunden sind.

## Revendications

1. Élément de soutien photovoltaïque souple (200), comprenant :
une pluralité de structures de fixation (1) ;
une structure de câble (2) reliée entre deux structures de fixation (1) qui sont disposées à intervalles ; la structure de câble (2) comprenant un premier câble d'assemblage (21), un second câble d'assemblage (22), un premier câble de stabilisation (23) et un second câble de stabilisation (24) ; le premier câble d'assemblage (21) et le second câble d'assemblage (22) étant situés au-dessus du premier câble de stabilisation (23) et du second câble de stabilisation (24) ;
un cadre de support (3) comprenant une tige de support de câble d'assemblage (31), une première tige de support latérale (32), une seconde tige de support latérale (33) et une tige de support de câble de stabilisation (34) ; deux extrémités de la tige de support de câble d'assemblage (31) étant reliées au premier câble d'assemblage (21) et au second câble d'assemblage (22) ; la première tige de support latérale (32) étant reliée à la tige de support de câble d'assemblage (31) et à la tige de support de câble de stabilisation (34) ; la seconde tige de support latérale (33) étant reliée à la tige de support de câble d'assemblage (31) et à la tige de support de câble de stabilisation (34) ; deux extrémités de la tige de support de câble de stabilisation (34) étant reliées au premier câble de stabilisation (23) et au second câble de stabilisation (24) ; **caractérisé en ce que**
une longueur de la tige de support de câble d'assemblage (31) est plus courte qu'une longueur de la tige de support de câble de stabilisation (34) ; et **en ce que**
la première tige de support latérale (32) et/ou la seconde tige de support latérale (33) s'étendent obliquement vers un extérieur le long d'une direction de haut en bas.

2. Élément de soutien photovoltaïque souple (200) selon la revendication 1, dans lequel le cadre de support (3) est symétrique par rapport à une ligne verticale centrale de la tige de support de câble d'assemblage (31).

3. Élément de soutien photovoltaïque souple (200) selon la revendication 1, dans lequel un angle entre la première tige de support latérale (32) et la tige de support de câble de stabilisation (34) est compris entre 30 degrés et 90 degrés ; et/ou
un angle entre la seconde tige de support latérale (33) et la tige de support de câble de stabilisation (34) est compris entre 30 degrés et 90 degrés.

4. Élément de soutien photovoltaïque souple (200) selon la revendication 1, dans lequel le cadre de support (3) comprend en outre une première tige de support (35) et une seconde tige de support (36) ; deux extrémités de la première tige de support (35) sont reliées à la tige de support de câble d'assemblage (31) et à la tige de support de câble de stabilisation (34), respectivement ; deux extrémités de la seconde tige de support (36) sont reliées à la tige de support de câble d'assemblage (31) et à la tige de support de câble de stabilisation (34), respectivement ; la première tige de support (35), la seconde tige de support (36) et la tige de support de câble de stabilisation (34) forment un triangle, ou, la première tige de support (35), la seconde tige de support (36) et la tige de support de câble d'assemblage (31) forment un triangle.

5. Élément de soutien photovoltaïque souple (200) selon la revendication 1, dans lequel la tige de support de câble d'assemblage (31), la première tige de support latérale (32), la seconde tige de support latérale (33) et la tige de support de câble de stabilisation (34) sont situées sur un même plan.

6. Élément de soutien photovoltaïque souple (200) selon la revendication 5, dans lequel la tige de support de câble d'assemblage (31) et la tige de support de câble de stabilisation (34) sont de l'acier en forme de U ; une ouverture de la tige de support de câble d'assemblage (31) et une ouverture de la tige de support de câble de stabilisation (34) sont opposées l'une à l'autre ; deux extrémités de la première tige de support latérale (32) et deux extrémités de la seconde tige de support latérale (33) sont respectivement insérées dans une ouverture de l'acier en forme de U et reliées par des attaches.

7. Élément de soutien photovoltaïque souple (200) selon la revendication 1, dans lequel le cadre de support (3) comprend en outre une pluralité de composants de liaison (37), et les deux extrémités de la tige de support de câble d'assemblage (31) sont respectivement dotées des composants de liaison (37) ;
dans lequel le premier câble d'assemblage (21) et le second câble d'assemblage (22) passent à travers les composants de liaison (37) et sont reliés à la tige de support de câble d'assemblage (31) ; et/ou, les deux extrémités de la tige de support de câble de stabilisation (34) sont respectivement dotées des composants de liaison (37), le premier câble de stabilisation (23) et le second câble de stabilisation (24) passent à travers les composants de liaison (37) et sont reliés à la tige de support de câble de stabilisation (34).

8. Élément de soutien photovoltaïque souple (200) selon la revendication 1, dans lequel une pluralité de cadres de support (3) sont ménagés et disposés à intervalles le long d'une direction de longueur (D1-D1) de la structure de câble (2) ; la pluralité de cadres de support (3) comprennent un premier cadre de support (3001) situé au milieu de la structure de câble (2) et une pluralité de seconds cadres de support (3002) ménagés de deux côtés du premier cadre de support (3001) le long de la direction de longueur (D1-D1) ; une aire du premier cadre de support (3001) est plus grande qu'une aire du second cadre de support (3002).

9. Système photovoltaïque souple (100), comprenant : l'élément de soutien photovoltaïque souple (200) selon l'une quelconque des revendications 1 à 8 ; le système photovoltaïque souple (100) comprenant en outre une pluralité de modules photovoltaïques (300) installés sur l'élément de soutien photovoltaïque souple (200) ; les modules photovoltaïques (300) étant reliés de manière fixe au premier câble d'assemblage (21) et au second câble d'assemblage (22).

10. Système photovoltaïque souple (100) selon la revendication 9, dans lequel l'élément de soutien photovoltaïque souple (200) comprend en outre une pluralité de blocs de pression (4) qui sont agencés sur un bord des modules photovoltaïques (300) ; le premier câble d'assemblage (21) et le second câble d'assemblage (22) passent à travers les blocs de pression (4) ; les modules photovoltaïques (300) sont reliés au premier câble d'assemblage (21) et au second câble d'assemblage (22) à travers les blocs de pression (4).
